Europäisches Patentamt

European Patent Office

Office européen des brevets

(11) Numéro de publication: **0 238 415**
**A2**

# DEMANDE DE BREVET EUROPEEN

(21) Numéro de dépôt: **87400605.9**

(22) Date de dépôt: **18.03.87**

(51) Int. Cl.⁴: **G 06 K 19/08**

(30) Priorité: **18.03.86 FR 8603838**

(43) Date de publication de la demande:
**23.09.87 Bulletin 87/39**

(84) Etats contractants désignés:
**AT BE CH DE ES GB GR IT LI LU NL SE**

(71) Demandeur: **Despres, Jean-Albert**
**99, Avenue des Champs-Elysées**
**F-75008 Paris (FR)**

(72) Inventeur: **Despres, Jean-Albert**
**99, Avenue des Champs-Elysées**
**F-75008 Paris (FR)**

(74) Mandataire: **Durand, Yves Armand Louis et al**
**Cabinet Z. Weinstein 20, Avenue de Friedland**
**F-75008 Paris (FR)**

(54) Dispositif d'identification d'un objet.

(57) La présente invention concerne un dispositif d'identification d'un objet.

Ce dispositif comprend un élément qui est inséré de manière invisible dans une carte et qui est constitué par un film ou une plaquette mince d'épaisseur égale ou inférieure à 0,05 mm.

Ce dispositif permet notamment l'identification d'une carte de crédit.

Fig. 2

EP 0 238 415 A2

## Description

"Dispositif d'identification d'un objet".

La présente invention concerne un dispositif d'identification d'un objet.

On connait d'après la demande de brevet européen No. 86 400 329.8 un dispositif d'identification d'un objet comprenant essentiellement un élément insérable dans l'objet et comportant un code formé d'encoches, silhouettes, ou analogues lisibles par un système de lecture, un ordinateur établissant la corrélation entre la forme de chaque encoche et l'information qui lui correspond, et une mémoire telle que par exemple un fichier contenant au moins une fiche portant des renseignements relatifs à l'objet et identifiable par l'ordinateur selon les informations obtenues à partir des encoches.

La présente invention a pour objet un dispositif du type ci-dessus et caractérisé en ce que l'élément insérable dans l'objet est constitué par un film ou une plaquette mince, de préférence métallique, incorporée dans un objet en forme de carte, disque ou analogue, tel que par exemple une carte de crédit.

Suivant une autre caractéristique de cette invention, la carte précitée est constituée par deux surfaces ou analogues, thermosoudées et entre lesquelles est prise en sandwich le film ou la plaquette précitée.

On ajoutera ici que l'épaisseur de la plaquette ou du film est de préférence égale ou inférieure à 0,05 mm.

Selon encore une autre caractéristique de l'invention, le système de lecture de la plaquette ou du film est constitué par un système optique approprié tel que par exemple un système à rayonnement laser.

On comprend donc que, l'invention trouve une application avantageuse pour des cartes de géométrie variée, telles que les cartes de crédit qui sont aujourd'hui de plus en plus utilisées pour effectuer des paiements ou des retraits d'argent.

Mais d'autres avantages et caractéristiques de cette invention apparaîtront mieux dans la description détaillée qui suit et se réfère aux dessins annexés, donnés uniquement à titre d'exemple, et dans lesquels :

- la figure 1 illustre schématiquement et en perspective la confection d'une carte devant comporter un insert en forme de plaquette ou de film ;

- la figure 2 est une vue en coupe verticale de la carte terminée ;

- la figure 3 est une vue en plan de dessus et à plus grande échelle d'une plaquette pouvant être insérée dans cette carte, et

- la figure 4 est une vue en coupe suivant la ligne IV-IV de la figure 3.

Suivant un exemple de réalisation, et en se reportant aux dessins annexés, un élément relativement mince et souple, tel que par exemple un film ou une plaquette métallique 1 est interposé entre deux surfaces 2 en un matériau synthétique approprié et qui, lorsqu'elles sont superposées et fixées par thermosoudage, constituent une carte de crédit par exemple.

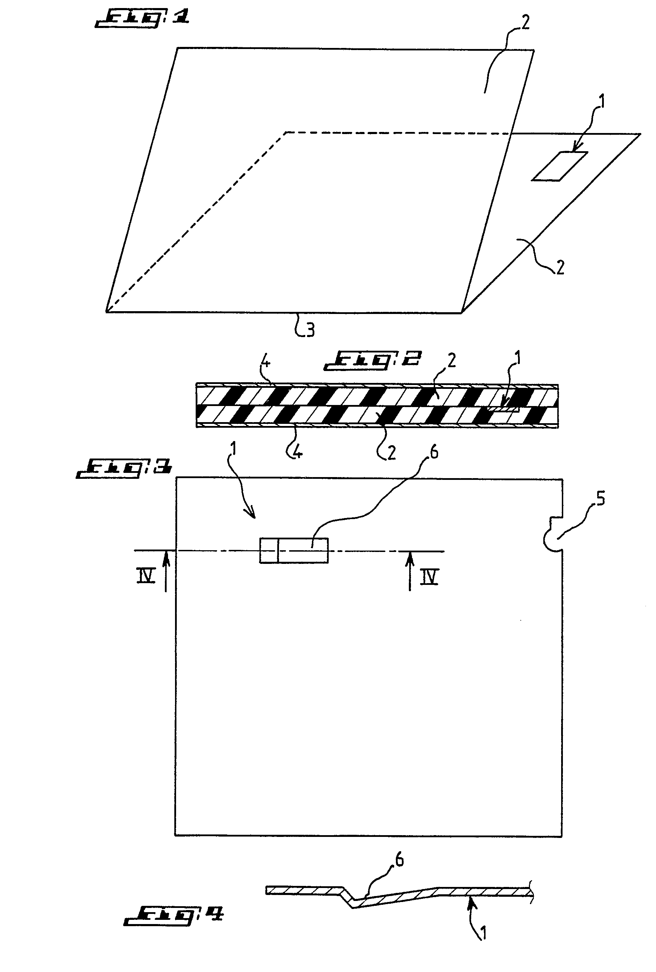

Les surfaces 2 peuvent être initialement constituées par deux plaques indépendantes ou bien, comme on le voit sur la figure 1, elles peuvent former une surface unique repliable, comme on l'a montré en 3.

Lorsque la carte est finie, elle présente, en coupe verticale, la structure visible sur la figure 2.

On voit sur cette figure les deux surfaces 2 fixées l'une à l'autre par soudage, ainsi que la plaquette ou film 1 prise en sandwich entre les surfaces 2. Il est à noter ici que la plaquette ou film 1 ne nuit aucunement à la souplesse de la carte.

On a montré en 4 une pellicule de matière plastique transparente qui revêt les deux faces extérieures de la carte. Cette pellicule est fixée par soudage sur la carte en même temps que sont soudées les surfaces 2.

L'épaisseur de la plaquette ou film 1 est de préférence égale ou inférieure à 0,05 mm, ce qui n'est pas préjudiciable à la souplesse de la carte, comme cela a été dit plus haut. La plaquette ou film 1, comme on le voit sur la figure 3, peut comporter des encoches ou silhouettes sur ses bords ou sur sa surface. C'est ainsi que l'on a montré en 5 une encoche sur l'un des bords de la plaquette 1, et en 6 un creux dans le corps de la plaquette, étant bien entendu que le nombre et la forme de ces encoches, creux, silhouettes ou analogues peuvent être multiples et quelconques.

On comprend donc de ce qui précède que la plaquette ou film 1 sera incorporé de façon invisible dans la carte. Mais ce film ou cette plaquette pourra être lu par un système optique approprié, tel que par exemple un système susceptible d'émettre un faisceau laser. D'autres systèmes de lecture peuvent parfaitement être envisagés sans sortir du cadre de cette invention.

On se reportera à la demande de brevet européen précitée pour ce qui concerne l'utilité et l'intérêt résultant de l'incorporation, de manière invisible, de la plaquette ou film 1 dans un objet qui est, selon la présente invention constitué par une carte de crédit.

On en dira simplement qu'après lecture des encoches ou creux 5, 6 de la plaquette 1, un ordinateur, associé à un fichier, établira la corrélation entre la forme de chaque encoche ou silhouette et l'information (lettre de l'alphabet ou autre) qui lui correspond, de sorte que ledit ordinateur pourra transmettre à un fichier un ordre permettant d'obtenir la ou les fiches identifiant en clair et complètement tous les renseignements relatifs à la carte (identité du propriétaire, dates de première mise en circulation et de renouvellement de la carte etc...).

En d'autres termes, on pourra donc centraliser sur une mémoire, telle qu'un fichier, des données relatives à un très grand nombre de cartes de crédit, étant bien entendu que le fichier central ne sera accessible qu'à des personnes dûment habilitées.

Bien entendu, l'invention n'est nullement limitée au mode de réalisation décrit et illustré.

C'est ainsi que la carte à plaquette codée incorporée peut présenter une forme circulaire ou polygonale quelconque et peut également être destinée à un usage quelconque et autre que celui permettant d'effectuer des paiements ou de retirer de l'argent dans un distributeur automatique.

De même, le nombre et la forme des encoches sur la plaquette peuvent être quelconques.

C'est dire que l'invention comprend tous les équivalents techniques des moyens décrits ainsi que leurs combinaisons si celles-ci sont effectuées suivant son esprit.

**Revendications**

1. Dispositif d'identifcation d'un objet, du type comprenant essentiellement : un élément insérable dans l'objet et comportant un code formé d'encoches, silhouettes ou analogues lisibles par un système de lecture ; un ordinateur établissant la corrélation entre la forme de chaque encoche et l'information qui lui correspond ; et une mémoire telle que par exemple un fichier contenant au moins une fiche portant des renseignements relatifs à l'objet et identifiable par l'ordinateur selon les informations obtenues à partir des encoches, caractérisé en ce que ledit élément est constitué par un film ou une plaquette mince (1), de préférence métallique, incorporé dans un objet en forme de carte, disque ou analogue, tel que par eemple une carte de crédit.

2. Dispositif selon la revendication 1, caractérisé en ce que la carte précitée est constituée par deux surfaces ou analogues (2) thermosoudées et entre lesquelles est pris en sandwich le film ou la plaquette précitée (1).

3. Dispositif selon la revendication 1 ou 2, caractérisé en ce que l'épaisseur de la plaquette ou film précité (1) est égale ou inférieure à 0,05 mm.

4. Dispositif selon l'une des revendications 1 à 3, caractérisé en ce que le système de lecture de la plaquette ou film précité est constitué par un sytème optique tel que par exemple un système à rayonnement laser.

0238415

Fig.1

Fig.2

Fig.3

Fig.4